# EUROPEAN PATENT APPLICATION

(11) **EP 4 679 895 A1**
(43) Date of publication of application: **14.01.2026**
(21) Application number: 25187904.5
(22) Date of filing: 07.07.2025
(51) Int. Cl.: H04W 40/22, H04W 8/00, H04W 40/24, H04W 76/14, H04W 88/04

(54) **METHOD AND DEVICE FOR CONTROLLING CONNECTION FOR MULTI-HOP SIDELINK RELAY OPERATION**

(30) Priority: 08.07.2024 KR 20240089879; 19.06.2025 KR 20250080990
(71) Applicant: KT Corporation, Seongnam-si, Gyeonggi-do 13606 (KR)
(72) Inventor: HONG, Sung Pyo, 13606 Seongnam-si (KR)
(74) Representative: Santarelli

(57) **Abstract**

Provided are a method and device for connection control of an UE providing a multi-hop relay operation in a sidelink network. The method may include receiving system information for a multi-hop sidelink relay operation, and transmitting a discovery message including at least one of information about whether there is an RRC connection and information about a number of hops connected to a base station.

## Description

### CROSS-REFERENCE TO RELATED APPLICATION

This application claims priority from Korean Patent Application Nos. 10-2024-0089879, filed on July 8, 2024, and 10-2025-0080990, filed on June 19, 2025, which are hereby incorporated by reference for all purposes as if fully set forth herein.

### BACKGROUND

### Field

The disclosure relates to an operation technology for sidelink relay connection.

### Description of Related Art

The new radio (NR) sidelink relay operation is configured to support sidelink relay for various services, such as Vehicle to Everything (V2X), public safety, and commercial application.

However, the sidelink relay operation supported only a single hop sidelink relay operation. This single hop sidelink relay operation, where only one relay UE is present between a base station and a UE, may have limited applicability in applications due to the inherent characteristics of relay-based communication.

In environments where relay operation is practically necessary, such as when the coverage of a base station is exceeded, support for a multi-hop relay operation is required. Particularly, there is a need to define a connection operation for supporting a multi-hop relay operation using sidelink communication.

### BRIEF SUMMARY

The disclosure provides a connection processing method and device for performing a multi-hop-based sidelink relay technology.

In an aspect, the disclosure may provide a method for connection control of an intermediate relay user equipment (UE) providing a multi-hop relay operation in a sidelink network. The method may include receiving system information for a multi-hop sidelink relay operation, and transmitting a discovery message including at least one of information about whether there is an RRC connection and information about a number of hops connected to a base station.

In another aspect, the disclosure may provide a method for connection control of a last relay UE providing a multi-hop relay operation in a sidelink network. The method may include receiving system information for a multi-hop sidelink relay operation from a base station, receiving a discovery solicitation message from a child relay UE, determining whether to transmit a discovery response message based on the discovery solicitation message and the system information, and transmitting the discovery response message to the child relay UE.

In another aspect, the disclosure may provide an intermediate relay UE performing connection control through a multi-hop relay operation in a sidelink network. The intermediate relay UE may include a receiver receiving system information for a multi-hop sidelink relay operation, and a transmitter transmitting a discovery message including at least one of information about whether there is an RRC connection and information about a number of hops connected to a base station.

In another aspect, the disclosure may provide a last relay UE performing a connection control operation for a multi-hop relay operation in a sidelink network. The last relay UE may include a receiver receiving system information for a multi-hop sidelink relay operation from a base station and receiving a discovery solicitation message from a child relay UE, a controller determining whether to transmit a discovery response message based on the discovery solicitation message and the system information, and a transmitter transmitting the discovery response message to the child relay UE.

According to the embodiments of the disclosure, a connection processing method and device may be provided for performing a multi-hop-based sidelink relay technology.

### DESCRIPTION OF DRAWINGS

The above and other aspects, features, and advantages of the disclosure will be more apparent from the following detailed description taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure.
FIG. 3 is a view for explaining resource grids supported by a radio access technology in accordance with embodiments of the disclosure;
FIG. 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a view illustrating a configuration of a multi-hop relay according to an embodiment;
FIG. 9 is a view illustrating operations of an intermediate relay UE according to an embodiment;
FIG. 10 is a view illustrating operations of a last relay UE according to an embodiment;
FIG. 11 is a view illustrating a configuration of an intermediate relay UE according to an embodiment; and
FIG. 12 is a view illustrating a configuration of a last relay UE according to an embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

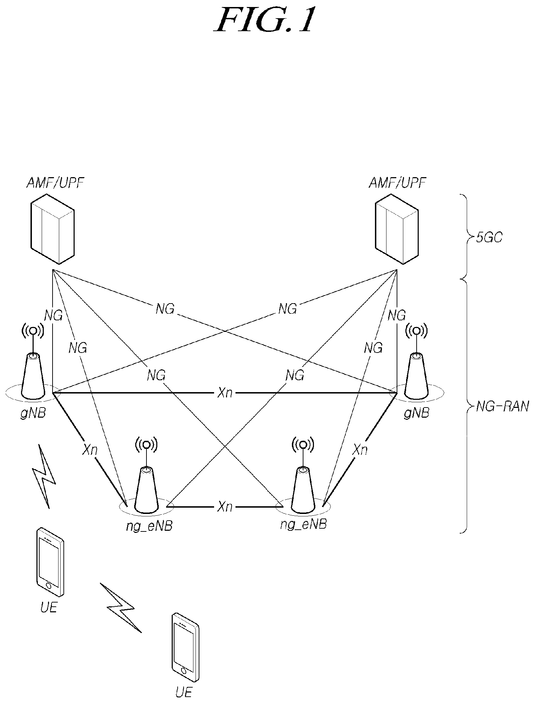

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

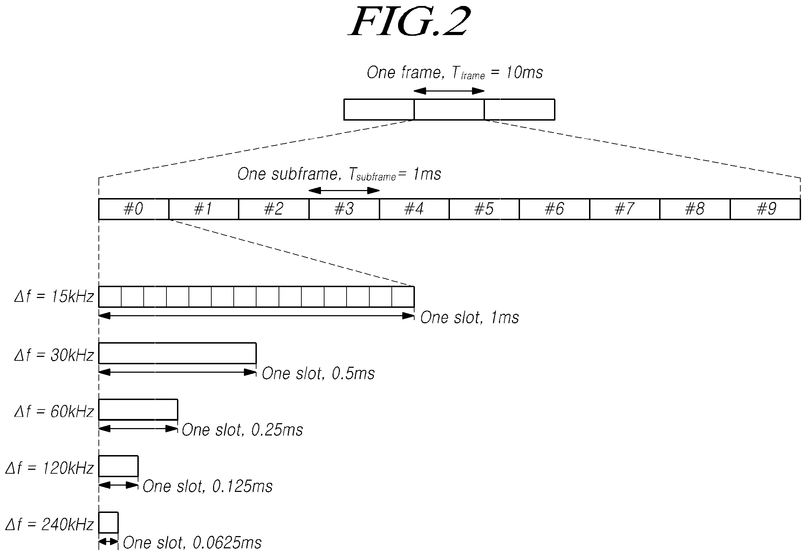

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

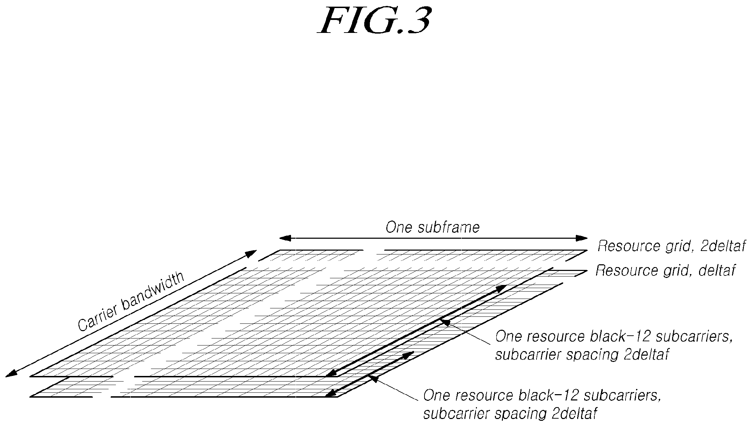

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

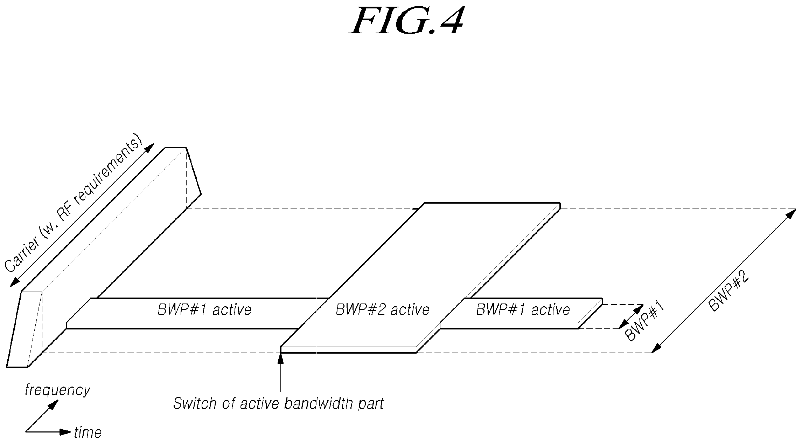

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

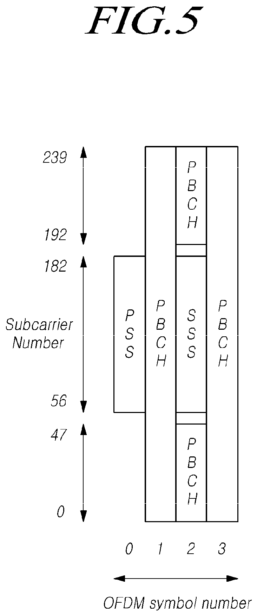

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB 1 on the PDSCH according to scheduling information. The remaining SIBs other than SIB 1 may be periodically transmitted, or the remaining SIBs may be transmitted according to the request of the UE.

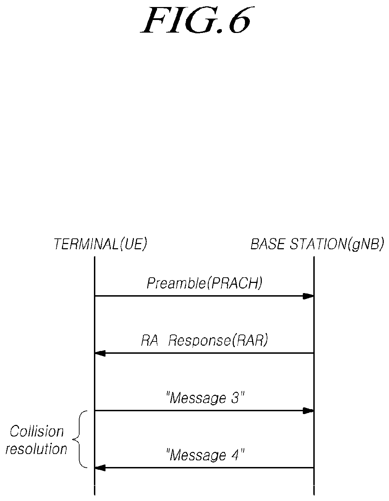

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

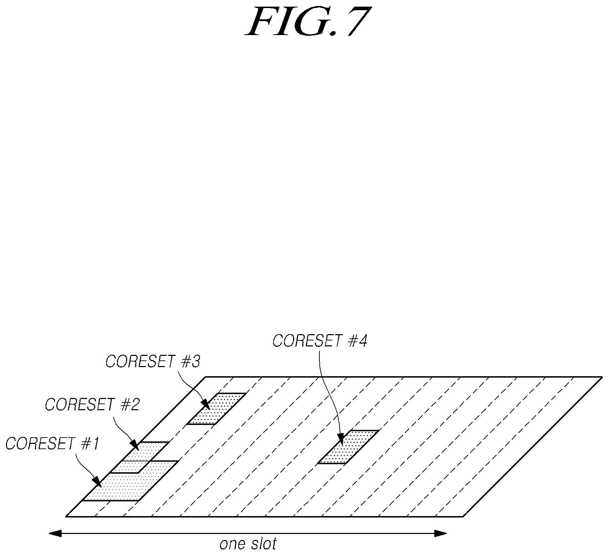

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as having meanings used in the past, present, or potentially in the future.

The disclosure relates to a relay UE connection control method and device for supporting multi-hop sidelink relay.

In 3GPP, through standardization of NR sidelink relay items in Rel-17 and Rel-18, the relay function based on NR sidelink has been standardized. This made it possible to support sidelink relay in V2X, public safety, commercial application services, or the like. However, the conventional NR sidelink relay was limited to a single hop relay. Thus, its applicability in applications was limited. To address this, functionality to support multi-hop relay is needed, but corresponding standardization efforts have not yet been completed. In particular, the typical mobile communication technology does not provide a connection support method for multi-hop sidelink relay.

Conceived to address the foregoing issues, the present embodiments propose a relay UE connection control method and device for transmitting/receiving data to/from a base station through an NR sidelink-based multi-hop relay UE. The method includes a relay selection method.

Hereinafter, a data processing method based on 5GS/NR technology is described. However, this is for convenience of description and the present embodiments may also be applied based on any system/radio access technology (e.g., LTE, 6G). Embodiments described in the disclosure include information elements specified in the NR/5GS standards (e.g., TS 38.321 as a MAC standard, TS 38.331 as an NR RRC standard, and TS 23.501 as a system structure standard) and associated operational procedure. Although the disclosure does not contain the content of the UE operation related to the definitions for the corresponding information elements, the content set forth in the standards may be incorporated in the disclosure.

Any function described below is defined as an individual-UE capability (UE radio capability or UE core network capability) and may be transmitted by the UE/device to the base station/core network entity (e.g. AMF/SMF) through corresponding signaling. Alternatively, one or more of the functions described may be combined/merged to be defined as the corresponding UE capability, and transmitted to the base station/core network entity through corresponding signaling by the UE.

The base station may transmit/indicate information for allowing/supporting/configuring the corresponding function/function combination for any function or any function combination, described below, to the UE through any downlink message (e.g., an RRC message, MAC control element, MAC PDU, or system information). For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The base station may transmit/indicate information for limiting/controlling any function described below, to the UE through any downlink message (e.g., an RRC message, MAC control element, or MAC PDU). For example, the prohibit timer of the corresponding function may be indicated. The corresponding prohibit timer may be start/restarted before or when the corresponding function is initiated. While the corresponding timer is running, the UE may limit/control the corresponding function not to he initiated/executed. For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The embodiments and corresponding functions described below may be performed individually and independently. The embodiments and related operations described below may be performed in combination with any embodiment and related operations, and it is obvious that they are also included in the scope of disclosure. Any embodiment and related operations may be performed in any order.

Any information described below may be traffic characteristic information (e.g., any statistics/statistical quantity such as expected value/average, deviation, standard deviation minimum, maximum, etc.) statistically/empirically obtained/calculated/derived by the UE/network. Therefore, any information included herein may indicate one or more of the average (expected value)/minimum/maximum/standard deviation values. This is for convenience of description, and all of the information in the disclosure may be used as statistical information. Any information described below may be information preconfigured in the UE/network or provisioned through OAM/application server/application function/UDM.

### Definition of relay UE function for supporting multi-hop sidelink relay

In NR technology, two UEs (i.e., remote UE and relay UE) are defined to support single hop sidelink relay. Here, the remote UE (U2N: UE-to-Network remote UE) is an UE that communicates with the network through a U2N relay UE. (a UE that communicates with the network via a U2N Relay UE.) . The U2N relay UE is a device that provides functionality to support connectivity to a base station for a U2N remote UE. (a UE that provides functionality to support connectivity to the network for U2N Remote UE(s).) In order to indicate the UE capability (UE capability) for two UEs, a relay UE operation capability (relayUE-Operation-L2-r17) and the remote UE operation capability (remoteUE-Operation-L2-r17) have been defined.

A sidelink relay was supported only through a single hop sidelink relay UE. Therefore, a UE operating as a sidelink remote UE could not provide the sidelink relay UE function at a time/simultaneously. A sidelink relay UE provided a U2N relay discovery service to allow discovery by the remote UE, access to a 5G system as a single UE, and a unicast traffic relay function between the remote UE and a base station. A single-hop sidelink relay was provided through one sidelink relay (e.g., a U2N relay UE) between the remote UE and a base station. For convenience of description, hereinafter, an L2/L3 U2N remote UE (or End UE) that intends to connect to one or more sidelink relay-based networks is referred to as a remote UE.

A multi-hop sidelink relay should provide relaying through a plurality of sidelink-based relay UEs between the remote UE and a base station. Therefore, it may be difficult to provide multi-hop operation with only the sidelink relay UE (or its function) of the prior art. In order to support a multi-hop sidelink relay, a sidelink-based relay UE (or its function or its functional entity) needs to be separately defined.

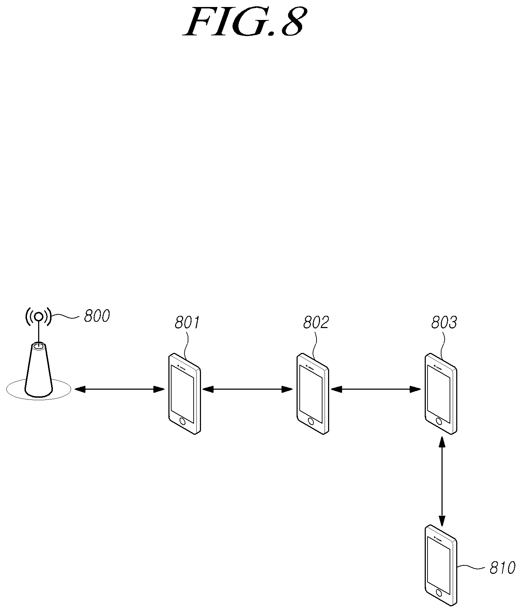

FIG. 8 is a view illustrating a multi-hop relay according to an embodiment.

Referring to FIG. 8, the multi-hop relay refers to a network where two or more relay UEs 801, 802, 803 transfer data over communication links between a base station 800 and the remote UE 810.

Among the two or more relay UEs, a relay UE 801 associated with the base station through a Uu interface may be described as a last relay UE. For example, a sidelink relay UE connected to the base station 800 through the Uu interface and connected to another sidelink relay UE through a PC5 interface is described as a last relay UE 801.

One or more sidelink relay UEs 802, 803 positioned between the last relay UE 801 and the remote UE 810 are described as intermediate relay UEs. Further, among the sidelink relay UEs, a relay UE that is first connected to the remote UE 810 is described as the first relay UE 803.

In other words, the last relay UE 801 refers to a relay UE connected to the base station. The intermediate relay UE refers to a relay UE positioned between the last relay UE 801 and the remote UE 810. Among the intermediate relay UEs, a UE tha tis first connected to the remote UE 810 may be more specifically described as the first relay UE.

For example, a sidelink relay UE may be divided into two relay UEs/functions. For example, a sidelink relay UE connected to the base station through a Uu interface and connected to another sidelink relay through the PC5 interface is referred to as the last relay UE for convenience of description. This is for convenience of description and may be replaced with any other name (e.g., PC5-Uu relay UE, L2 PC5-Uu U2N relay UE, terminal relay, top-level relay, parent relay, etc.). One or more sidelink relay UEs positioned between the last relay UE and the remote UE may be denoted as an intermediate relay UE (type 1) for convenience of description. This is for convenience of description and may be replaced with any other name.

As another example, it may be divided into three relay UE functions. For example, a sidelink relay UE connected to the base station through a Uu interface and connected to another sidelink relay through a PC5 interface (last relay UE), a sidelink relay UE directly connected to the remote UE through a PC5 interface (for convenience of description, referred to as the first relay UE). This is for convenience of description and may be replaced with any other name such as access relay, relay, lowest-level relay, child relay, etc.), and one or more sidelink relay UEs positioned between the last relay UE and the first relay UE (for convenience of description, referred to as intermediate relay UE (type 2), which may be replaced with any other name) may be separately defined.

The last relay UE may be connected to the base station through a Uu interface and also connected to another sidelink relay UE through a PC5 interface. The last relay UE may provide connectivity to a network (e.g., a base station) for remote UEs directly/indirectly connected to the last relay UE. Here, a direct connection between the last relay UE and the remote UE indicates that the remote UE is directly connected to the relay UE through a PC5 interface.

For example, it indicates a connection from the remote UE to the last relay UE. An indirect connection between the last relay UE and the remote UE indicates that the remote UE is connected to the relay UE through one or more sidelink relay UEs. For example, it indicates a connection such as remote UE-intermediate relay UE-last relay UE, remote UE-first relay UE-intermediate relay UE-last relay UE, etc. The last relay UE may initiate/trigger/perform the operation(s) when positioned in the base station coverage to provide connectivity to the base station for remote UEs directly/indirectly connected to the last relay UE. For example, in the case where the last relay UE moves out of coverage, Uu RLF, RRC connection failure, etc., the last relay may be instructed to direct the relevant information to directly/indirectly connected remote UEs and/or intermediate relay UEs and/or first relay UE.

An intermediate relay UE (type 1) or an intermediate relay UE (type 2) only differs in whether the sidelink relay UE is divided into two types or three types, but it may be directly/indirectly connected to the last relay UE to provide connectivity to a network (e.g., a base station) for remote UEs directly/indirectly connected to the intermediate relay UE (through the last relay). Hereinafter, for convenience of description, the intermediate relay UE (type 1) or the intermediate relay UE (type 2) is referred to as an intermediate relay UE. The intermediate relay UE may be configured to operate as an intermediate relay UE (type 1). For instance, the first relay UE may also serve as an intermediate relay UE. The corresponding UE type information may be set to the same value.

The intermediate relay UE may be configured to operate as an intermediate relay UE (type 2). For example, the intermediate relay UE may be a relay UE distinguished from the first relay UE. The corresponding UE type information may be set to a different value.

The first relay UE may be (directly) connected to the remote UE through a PC5 interface and connected to one of the intermediate relay UE, the last relay UE, or the base station. For example, based on SL-RSRP/SD-RSRP measurements for the relay UE or RSRP measurements for the base station cell, the relay UE or the cell may be selected for connection. When the first relay UE is directly connected to the base station, it may provide the last relay UE function.

The last relay UE may connect with remote UE(s) in its sidelink coverage. For example, it may connect as remote UE-last relay UE-base station. In such a case, the last relay UE may operate similarly to a single-hop relay UE of the prior art. The intermediate relay UE may connect with remote UE(s) in its sidelink coverage. For example, it may connect as remote UE-intermediate relay UE-last relay UE-base station. Thus, assuming that all types of sidelink relay UEs are directly connected to remote UEs, the last relay UE and the intermediate relay UE may provide a first remote UE function (e.., first hop remote UE connection). In such cases, the sidelink relay UE may be processed by distinguishing between two relay UEs/functions (i.e., the last relay UE and the intermediate relay UE).

One sidelink relay UE may be configured to support only one UE function at a time, either the intermediate relay UE function or the last relay UE function. One sidelink relay UE may be configured not to provide both the intermediate relay UE function and the last relay UE function at once/simultaneously. For example, when the intermediate relay UE detects a PC5-RLF on the PC5 interface with a previous last relay UE, the intermediate relay UE may connect to the base station through cell reselection (after releasing the PC5 connection with the previous last relay UE). In such a case, the intermediate relay UE may be configured to operate as the last relay UE. The base station may indicate the corresponding configuration to allow the intermediate relay UE to operate as the last relay UE.

Meanwhile, it may also be configured to provide the sidelink relay UE function to the UE operating as a remote UE according to the multi-hop sidelink support, at a time/simultaneously. For example, if the remote UE is a UE capable of intermediate relay UE function (e.g., intermediated relay capable UE), the remote UE may perform any intermediate relay UE operation (described in the disclosure). For example, the data/traffic of the remote UE may be transmitted to the base station through one or more sidelink relay UEs. The remote UE operates as a sidelink relay UE and may transmit its own data/traffic and that of the remote UE connected to the corresponding UE to the base station through one or more sidelink relay UEs.

For convenience of description, the following description is based on a three-hop relay connection of "remote UE-first relay UE-intermediate relay UE-last relay UE-base station." As described above, the first relay UE may serve as the intermediate relay UE. In such a case, the three-hop relay connection may be connected as "remote UE-first intermediate relay UE-second intermediate relay UE-last relay UE-base station." While the description is based on "remote UE-first relay UE-intermediate relay UE-last relay UE-base station" for convenience, it is evident that processing based on relay UE roles (last relay UE and intermediate relay UE) as "remote UE-first intermediate relay UE-second intermediate relay UE-last relay UE-base station" is also in the scope of the disclosure.

For convenience of description, the relay node closer to the remote UE among two sidelink relay nodes connected through the PC5 interface is referred to as a lower relay UE, and the relay node closer to the base station is referred to as an upper relay UE. This is also for convenience of description, and a lower relay UE may be replaced with any other name, such as a downlink relay UE or a child relay UE. Similarly, an upper relay UE may be replaced with any other name, such as an uplink relay UE or a parent relay UE.

For example, out of two relay UEs connected through the PC5 interface, the relay UE with fewer hops for connection to the base station (or more hops for connection to the remote UE) becomes the upper relay UE. The relay UE with more hops for connection to the base station (or fewer hops for connection to the remote UE) becomes the lower relay UE.

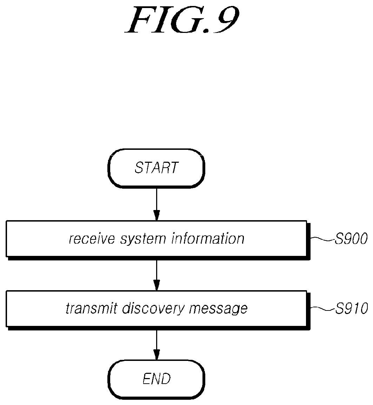

FIG. 9 is a view illustrating operations of an intermediate relay UE according to an embodiment.

Referring to FIG. 9, a method for controlling connection of an intermediate relay UE providing a multi-hop relay operation in a sidelink network may include receiving system information for a multi-hop sidelink relay operation (S900).

For example, the intermediate relay UE may be configured to perform relay UE operations and remote UE operations simultaneously. The intermediate relay UE may include a relay UE function for relaying data between the remote UE and the parent UE. Further, the intermediate relay UE may include the remote UE function for operating as the remote UE.

The intermediate relay UE may operate as the remote UE to transfer or receive data to/from a higher relay UE. Further, the intermediate relay UE may operate as a relay UE to transfer or receive data to/from a lower relay UE or the remote UE.

The intermediate relay UE may receive a sidelink RRC message from the parent relay UE. The parent relay UE, which is a relay UE positioned higher than the intermediate relay UE, may be another intermediate relay UE or the last relay UE.

An intermediate relay UE may receive system information transmitted by a base station. The system information may be received directly by the intermediate relay UE from the base station. Alternatively, the system information may be received from a last relay UE or a parent relay UE.

For example, the system information may include at least one of indication information indicating whether the multi-hop sidelink relay operation is supported and discovery threshold information. The indication information indicating whether the multi-hop sidelink relay operation is supported indicates whether the base station may support the multi-hop sidelink relay operation according to the disclosure. For example, the indication information may indicate whether the base station possesses the sidelink multi-hop relay support function. For this purpose, the indication information may be configured as 1 bit.

Further, the discovery threshold information may include a threshold used for multi-hop sidelink relay connections. For example, the threshold may represent an RSRP value. The discovery threshold information may represent an SD-RSRP threshold for the intermediate relay UE to evaluate AS layer conditions for discovery operations. The intermediate relay UE may apply the discovery threshold to evaluate AS layer conditions to determine whether to transfer a discovery solicitation message when performing multi-hop sidelink relay discovery.

Meanwhile, the system information may be SIB12 and may include configuration information for sidelink relay operations.

The intermediate relay UE may store information included in the system information in the intermediate relay UE. Further, the intermediate relay UE may configure entities for relay operation in the UE using the configuration information of the system information.

The connection control method of the intermediate relay UE may include transmitting a discovery message including at least one of information indicating whether there is an RRC connection and information indicating the number of hops to the base station (S910).

For example, the discovery message may be any one of a discovery announcement message, a discovery solicitation message, and a discovery response message. The intermediate relay UE may perform a discovery procedure using the above-described system information. The discovery procedure may include various operations.

In an example, the intermediate relay UE may transmit a discovery announcement message to transmit information about whether the sidelink relay operation is supported. As another example, the intermediate relay UE may transmit a discovery solicitation message to perform a connection operation with a parent relay UE or a child relay UE for a sidelink relay connection. In yet another example, the intermediate relay UE may transmit a discovery response message to perform a connection operation with the parent relay UE or child relay UE that transmitted the discovery solicitation message.

Here, the discovery message may include at least one of information (e.g., RRC connection information) indicating whether there is an RRC connection and information (e.g., hop count information) indicating the number of hops connected to the base station as described above. For example, the RRC connection information may indicate whether the intermediate relay UE is in an RRC connected state. Alternatively, the RRC connection information may include information indicating whether the intermediate relay UE is in a state capable of entering an RRC connected state. The hope count information may include a counting value that counts the number of hops where the intermediate relay UE is connected to the base station. Further, the discovery message may further include a maximum hop limit value (hop limit) where the intermediate relay UE may be connected to the base station.

Meanwhile, the transmission of the discovery message may be determined based on the signal strength information of the discovery solicitation message received from the child relay node and the discovery threshold information included in the system information.

For example, the intermediate relay UE may receive a discovery solicitation message from the child relay UE. The intermediate relay UE may determine whether to transmit the discovery message according to the comparison result of the signal strength information of the received discovery solicitation message and the discovery threshold information. For example, when the received signal strength of the discovery solicitation message exceeds (or is equal to) the discovery threshold, it may be determined to transmit the discovery message.

Here, the discovery message may be a discovery solicitation message or a discovery response message.

In an example, if the discovery solicitation message received from the child relay UE is received with a signal strength equal to or larger than the discovery threshold, the intermediate relay UE may transfer the discovery solicitation message to the parent relay UE. Here, the discovery solicitation message may include indication information indicating whether there is an RRC connection and hop count information, hop limit information, etc., as described above.

As another example, when the intermediate relay UE already has a link according to the PC5 interface with the parent relay UE (e.g., the last relay UE), and the signal strength of the discovery solicitation message exceeds the discovery threshold, a discovery response message may be transmitted to the child relay UE.

Accordingly, the remote UE may be sequentially connected to the child relay UE (first relay UE), the intermediate relay UE, and the last relay UE to establish a multi-hop sidelink relay connection.

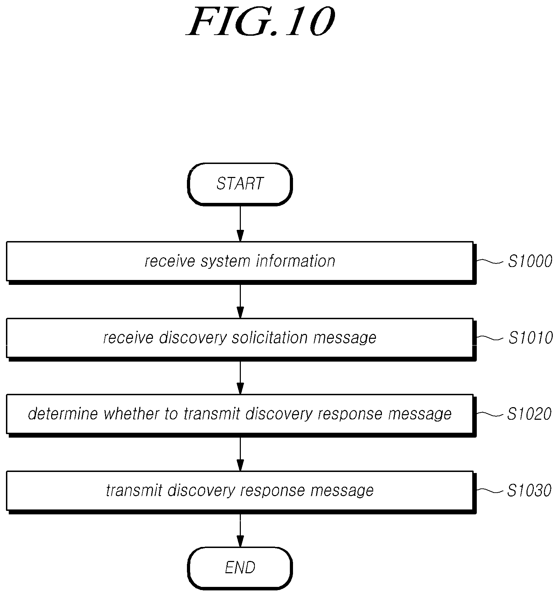

FIG. 10 is a view illustrating operations of a last relay UE according to an embodiment.

Referring to FIG. 10, a connection control method for a last relay UE providing a multi-hop relay operation in a sidelink network may include receiving system information for a multi-hop sidelink relay operation from a base station (S 1000).

The last relay UE may receive the system information transmitted by the base station. The system information may be received through SIB12.

For example, the system information may include at least one of indication information indicating whether the multi-hop sidelink relay operation is supported and discovery threshold information. The indication information indicating whether the multi-hop sidelink relay operation is supported indicates whether the base station may support the multi-hop sidelink relay operation according to the disclosure. For example, the indication information may indicate whether the base station possesses the sidelink multi-hop relay support function. For this purpose, the indication information may be configured as 1 bit.

Further, the discovery threshold information may include a threshold used for multi-hop sidelink relay connections. For example, the threshold may represent an RSRP value. The discovery threshold information may represent an SD-RSRP threshold for evaluating AS layer conditions for a discovery operation by the intermediate relay UE, the last relay UE, or the first relay UE. The last relay UE may evaluate the AS layer condition by applying the discovery threshold to determine whether to transmit a response message to a discovery solicitation message when performing multi-hop sidelink relay discovery.

The last relay UE may store the information included in the system information in the last relay UE. Further, the last relay UE may configure entities for relay operation in the UE using the configuration information of the system information.

The connection control method of the last relay UE may include receiving a discovery solicitation message from the child relay UE (S 1010).

For example, the last relay UE may receive a discovery solicitation message transmitted by a lower child relay UE. Here, the child relay UE may mean the intermediate relay UE not connected to the last relay UE through a PC5 interface link.

The connection control method of the last relay UE may include determining whether to transmit a discovery response message based on the discovery solicitation message and the system information (S1020).

For example, the last relay UE may perform a connection operation with the child relay UE that transmitted the discovery solicitation message by transmitting a discovery response message. To this end, the last relay UE may determine whether to transmit a discovery response message to the discovery solicitation message.

For example, the transmission of the discovery response message may be determined based on the signal strength information for the discovery solicitation message and the discovery threshold information included in the system information. In an example, the last relay UE may determine to transmit the discovery response message to the child relay UE when the signal strength information exceeds the discovery threshold information. In other words, the transmission of the discovery response message may be determined when the received discovery solicitation message indicates a received signal strength equal to or larger than the discovery threshold. Here, the received signal strength may be an RSRP value.

The discovery solicitation message or the discovery response message may include at least one of i) the RRC connection information that indicates whether there is an RRC connection and ii) the hop count information that indicates the number of hops connected to the base station. For example, the RRC connection information may indicate whether the last relay UE or the intermediate relay UE is in an RRC connected state. Alternatively, the RRC connection information may include information indicating whether the intermediate relay UE or the last relay UE is in a state capable of entering the RRC connected state. The hop count information may include a counting value that counts the number of hops where the intermediate relay UE or the last relay UE is connected to the base station. Further, the discovery solicitation message or the discovery response message may further include a maximum hop limit value (hop limit) where the intermediate relay UE or the last relay UE may be connected to the base station.

The connection control method of the last relay UE may include transmitting the discovery response message to the child relay UE (S1030).

The last relay UE may transmit the discovery response message to the child relay UE based on the determination result regarding whether to transmit the above-described discovery response message.

Accordingly, the remote UE may be sequentially connected to the child relay UE (first relay UE), the intermediate relay UE, and the last relay UE to establish a multi-hop sidelink relay connection.

The above description of the operations focus primarily on the discovery procedure. However, as described below, the above-described operations and information elements may be applicable not only to the discovery procedure but also to cell (relay) selection/reselection operations.

Below, more various embodiments of the sidelink relay connection operation that may be performed by the above-described UEs are described.

### Discovery and relay UE selection/reselection between sidelink relay UEs

In order to support multi-hop sidelink relaying, the last relay UE, intermediate relay, and first relay UE may support access to the core network (e.g., 5G system) as one UE in the same manner as the sidelink relay UE of the prior art. Meanwhile, the sidelink relay UE of the prior art only supported discovery by the remote UE. Therefore, a method to provide a discovery service among relay UEs should be supported to enable multi-hop sidelink relaying.

In an example, a sidelink relay UE may provide information indicating whether the sidelink relay provides the last relay UE function/service and/or the intermediate relay UE function/service (or information indicating whether the last relay UE function/service, the intermediate relay UE function/service, and/or the first relay UE function/service is provided) as a discovery parameter of the relay UE through a relay service code (RSC), through indication information associated with the relay service code, or through one or more parameters included in the discovery message (e.g., type of discovery message, discoverer info, RSC, indication information associated with RSC, source layer-2 ID, destination layer-2 ID, hop count, cell identifier, any newly defined parameter, etc.).

For example, a relay service code may be used to indicate support for the first relay UE function/service for a normal service. A relay service code may be used to indicate support for the intermediate relay UE function/service for a normal service. A relay service code may be used to indicate support for the last relay UE function/service for a normal service. A relay service code may be used to indicate support for a multi-hop sidelink relay UE function/service for a normal service. A relay service code may be used to indicate support for connectivity function/service for the intermediate relay UE for a normal service.

As another example, a relay service code may be used to indicate support for the last relay UE function/service for an emergency service (or emergency and normal service). A relay service code may be used to indicate support for the intermediate relay UE function/service for an emergency service (or emergency and normal service). A relay service code may be used to indicate support for the first relay UE function/service for an emergency service (or emergency and normal service). A relay service code may be used to indicate support for a multi-hop sidelink relay UE function/service for an emergency service (or emergency and normal service). A relay service code may be used to indicate support for connectivity function/service for the intermediate relay UE for an emergency service (or emergency and normal service).

As another example, for each (any) RSC, the sidelink relay may provide information indicating whether to provide the last relay UE function/service and/or the intermediate relay UE function/service as a discovery parameter of the relay UE. For each (any) RSC, the sidelink relay may provide information indicating whether to provide the last relay UE function/service and/or the intermediate relay UE function/service and/or the first relay UE function/service as a discovery parameter of the relay UE. For each (any) RSC, the sidelink relay may provide information indicating support for a multi-hop sidelink relay UE function/service as a discovery parameter of the relay UE. For each (any) RSC, the sidelink relay may provide information indicating support for connectivity function/service for the intermediate relay UE as a discovery parameter of the relay UE.

As another example, through any field included in the discovery message (e.g., User Info ID, or a new field), the sidelink relay may provide information indicating whether to provide the last relay UE function/service and/or the intermediate relay UE function/service as a discovery parameter of the relay UE (in association with the RSC, or for the entire RSC regardless of the RSC).

Through any field included in the discovery message (e.g., User Info ID, or a new field), the sidelink relay may provide information indicating whether to provide the last relay UE function/service and/or the intermediate relay UE function/service and/or the first relay UE function/service as a discovery parameter of the relay UE (in association with the RSC, or for the entire RSC regardless of the RSC). Through any field included in the discovery message (e.g., User Info ID, or a new field), the sidelink relay may provide information indicating support for a multi-hop sidelink relay UE function/service as a discovery parameter of the relay UE (in association with the RSC, or for the entire RSC regardless of the RSC). Through any field included in the discovery message (e.g., User Info ID, or a new field), the sidelink relay may provide information indicating support for connectivity function/service for the intermediate relay UE as a discovery parameter of the relay UE (in association with the RSC, or for the entire RSC regardless of the RSC).

As another example, the last relay UE should be able to establish a wireless connection to the base station in the base station coverage. Otherwise, it may be difficult to provide connectivity to the base station through another sidelink relay UE. The last relay UE may determine whether it is allowed to transmit any discovery message only when the UE is in the base station coverage and may transmit/receive discovery messages accordingly.

The base station may broadcast, through the system information, or indicate, to the UE through a dedicated RRC message, a threshold (e.g., maximum Uu RSRP threshold, minimum Uu RSRP threshold) used to determine whether the last relay UE may transmit any discovery message. The last relay UE may determine whether the last relay UE may transmit any discovery message and transmit/receive the discovery message under threshold conditions (e.g., when no maximum Uu RSRP threshold is configured; or when the RSRP measurement value in the camping cell (or PCell) is lower than the maximum Uu RSRP threshold by a specific correction value (hystMaxRelay); and when no minimum Uu RSRP threshold is configured; or when the RSRP measurement value in the camping cell (or PCell) is higher than the minimum Uu RSRP threshold by a specific correction value (hystMinRelay)) in the cell (or PCell) where the UE camps.

For the threshold parameter/information element, the parameter/information element provided for the U2N relay UE of the prior art may be reused. However, for the base station to identify that the relay UE is a UE providing functions distinct from those of the U2N relay UE of the prior art, any new parameter or information element may be included in the UE configuration information and indicated. The parameter/information element may be explicit indication information for indicating the last relay UE type. The parameter/information element may be explicit indication information for indicating connectivity support for any sidelink relay UE. It may be implicitly indicated through the information necessary to indicate connectivity support for any sidelink relay UE. As another method, the threshold parameter/information element may be defined as a new parameter/information element distinct from the parameter/information element provided for the U2N relay UE of the prior art. This may allow the last relay UE to determine to transmit discovery messages to other sidelink relay UEs.

As another example, in the prior art, if a maximum Uu RSRP threshold or a minimum Uu RSRP threshold is not configured, the U2N relay UE may consider that the threshold condition is met, and the U2N relay UE may determine to transmit any discovery message to perform discovery. To support a multi-hop sidelink relay, whether a connection to a base station is possible may be an important consideration for relay selection. Accordingly, a threshold (e.g., a maximum Uu RSRP threshold, a minimum Uu RSRP threshold) used to determine whether the last relay UE may transmit any discovery message may be pre-configured in the UE. For example, even when the base station servicing the cell in which the UE is camping (or PCell) does not broadcast the information through system information or indicate through a dedicated RRC message, the UE may use the threshold to determine the transmission of the discovery message.

As another example, the last relay UE may transmit/receive necessary information for the intermediate relay UE (and/or first relay UE and/or remote UE) to select/reselect the last relay UE by including it in the discovery message (e.g., one or more of an announcement message or a solicitation message, or a response message to the solicitation message).

The last relay UE may transmit/receive information indicating that the sidelink relay is capable of providing the last relay UE function/service in the base station coverage by including it in the discovery message (e.g., one or more of an announcement message or a solicitation message, or a response message to the solicitation message).

The last relay UE may provide information indicating that the sidelink relay is in the base station coverage as a discovery parameter of the relay UE through the relay service code (RSC), or through indication information associated with the relay service code, or through any parameter included in the discovery message.

The last relay UE may provide information indicating whether the sidelink relay is capable of providing the last relay UE function/service in the base station coverage as a discovery parameter of the relay UE through the relay service code (RSC), or through indication information associated with the relay service code, or through any parameter included in the discovery message.

The last relay UE may provide information indicating that the sidelink relay is in a connected state (e.g., RRC connection) or connectable state with the base station through the Uu interface as a discovery parameter of the relay UE through the relay service code (RSC), or through indication information associated with the relay service code, or through any parameter included in the discovery message. For example, the information may be transmitted by including it in an RRC container included in a discovery announcement message.

The last relay UE may set the information about the number of hops where the sidelink relay is connected to the base station to 0 (or a specific value, such as 1, which is the number of hops connected to the base station) through the relay service code (RSC), or through indication information associated with the relay service code, or through any parameter included in the discovery message. Accordingly, it may indicate that it is in a state capable of connection to the base station.

The last relay UE may provide, as the discovery parameter of the relay UE, any cell identification information (e.g., NR CGI, PCI) meeting a specific threshold or identification information of the cell (e.g., one of any cell identification information such as NR CGI or PCI) where the sidelink relay is camping/connected/connectable/in coverage through the relay service code (RSC), or through indication information associated with the relay service code, or through any parameter included in the discovery message. Accordingly, it may implicitly indicate that the sidelink relay is in coverage. Alternatively, it may be used to preferentially select/reselect a relay UE positioned in the same cell based on the cell identification information. For example, another relay UE (or remote UE) may preferentially select/reselect the last relay UE positioned in the same cell based on the cell identification information.

The last relay UE may provide, as the discovery parameter of the relay UE, the Uu RSRP measurement value for the cell/base station where the sidelink relay is connected/connectable/in coverage through the relay service code (RSC), or through indication information associated with the relay service code, or through any parameter included in the discovery message. The information may represent the measurement value itself or information (e.g., good/average/poor) coded into n levels (where n is an integer greater than 1). The information may be used by the intermediate relay UE or the remote UE to select the relay UE.

The intermediate relay UE (e.g., UE capable of intermediated relay UE) may select/reselect the last relay UE or another intermediate relay UE under the following conditions.

In an example, when the intermediate relay UE does not have a serving cell; or
when the RSRP measurement value in the cell in which the UE is camping (or PCell) is lower than a specific Uu RSRP threshold that is pre-configured, configured, or indicated to the intermediate relay UE (e.g., maximum/high Uu RSRP threshold, thrsh_Max/High) (or lower by a specific correction value (hystMax/High) than a specific Uu RSRP threshold):
>if the intermediate relay UE does not have a selected last relay UE or another intermediate relay UE; or
>if the intermediate relay UE has a selected last relay UE or another intermediate relay UE, but the current SL-RSRP/SD-RSRP of the selected relay UE is less than the threshold (e.g., sl-RSRP-Thresh/sd-RSRP-Thresh); or
>if the intermediate relay UE has a selected last relay UE or another intermediate relay UE, but a higher layer has indicated not to use the currently selected relay UE; or
>if the intermediate relay UE has a selected last relay UE or another intermediate relay UE, but a higher layer has requested the release of the PC5-RRC connection; or
>if the intermediate relay UE has a selected last relay UE or another intermediate relay UE, but a sidelink radio link failure has been detected in the PC5-RRC connected state; or

The intermediate relay UE may perform a sidelink discovery procedure to discover a candidate last relay UE or another intermediate relay UE. The intermediate relay UE may consider a sidelink relay UE with an SD-RSRP exceeding a specific threshold (e.g., sl-RSRP-Thresh/sd-RSRP-Thresh) (or exceeding a specific correction value (sl-HystMin) above a specific threshold) as a candidate last relay UE (or candidate intermediate relay UE). If the intermediate relay UE detects any suitable last relay UE (or intermediate relay UE), one of the available suitable last relay UEs (or intermediate relay UEs) may be selected. To select a suitable last relay UE (or intermediate relay UE), the intermediate relay UE may identify from the information obtained from the last relay UE (or intermediate relay UE) during the discovery procedure whether the PLMN is authorized to connect to the last relay UE (or intermediate relay UE).

As another example, when connecting the remote UE to the base station through a multi-hop sidelink relay, if the sidelink relay UEs included in the path between the remote UE and the base station are in the base station coverage, it is preferable that the sidelink relay UE is connected through a relay UE in the same cell coverage. Otherwise, a parameter mismatch may occur during any sidelink relay operation process, including resource allocation. To avoid this, the following operation may optionally be performed.

When the remote UE is in the base station coverage (e.g., when the RSRP measurement value is larger than a specific Uu RSRP threshold pre-configured/configured/indicated to the remote UE), it may select/reselect the last relay UE camping in the same cell as the camping cell (or RRC connected with the same cell taken as PCell). The remote UE may prioritize the corresponding cell (or the frequency of the corresponding cell) to select/reselect a relay UE. If the remote UE moves out of the base station coverage, the remote UE may select/reselect a relay UE without considering cell information (in accordance with typical methods).

When the intermediate relay UE is in the base station coverage (e.g., when the RSRP measurement value is larger than a specific Uu RSRP threshold that is preconfigured, configured, or indicated to the remote UE), it may select/reselect the last relay UE camping on the same cell as the camped cell (or RRC connected with the same cell taken as the PCell). The remote UE may prioritize the corresponding cell (or the frequency of the corresponding cell) to select/reselect a relay UE. When the intermediate relay UE moves out of the base station coverage, the remote UE may select/reselect a relay UE without considering cell information (according to a conventional method).

As another example, the intermediate relay UE should be able to establish a wireless connection to the base station through the last relay UE or another intermediate relay UE even when it moves out of the base station coverage. For example, as described in the above-described embodiment, when the intermediate relay UE does not have a serving cell, it may select/reselect the last relay UE or another intermediate relay UE according to the above-described procedure.

As another example, the intermediate relay UE should be able to establish a wireless connection to the base station through the last relay UE even when it is in the base station coverage. For example, as described in the above-described embodiment, when the RSRP measurement value in the cell (or PCell) where the UE is camping is lower than a specific Uu RSRP threshold (e.g., a maximum/high Uu RSRP threshold, thrsh_Max/High) that is preconfigured, configured, or indicated to the intermediate relay UE (or when it is lower by a specific correction value (hystMax/High) than the specific Uu RSRP threshold), it may select/reselect the last relay UE or another intermediate relay UE according to the above-described procedure.

The base station may broadcast a threshold used to determine whether the intermediate relay UE may transmit any discovery message and/or a threshold used for the relay selection/reselection of the intermediate relay UE through system information or indicate to the UE through a dedicated RRC message. The parameter may be any information included in the above-described embodiment. For example, it may include one or more of the SD-RSRP threshold and the correction values (hystMax/hystMin). The parameter may be used to determine whether to transmit any discovery message. When the intermediate relay UE receives a discovery solicitation message from the first relay UE, it may determine to transmit the discovery response message to the first relay UE when the SD-RSRP is higher than the threshold by the correction value. Alternatively, when the intermediate relay UE receives the discovery solicitation message from the first relay UE, it may determine to transmit the discovery solicitation message to the last relay UE or another intermediate relay UE when the SD-RSRP is higher than the threshold by the correction value. The threshold parameter/information element may be indicated as a parameter distinct from the parameter/information element provided for a U2N relay selection/reselection in the related art.

As another example, the base station may broadcast, through the system information, or indicate, to the UE through a dedicated RRC message, information necessary for selecting/reselecting the intermediate relay UE, last relay UE, or another intermediate relay UE. The information may include one or more of the maximum number of hops allowed for the intermediate relay UE, information for indicating to prioritize selection/reselection of the same cell as the cell where the last relay UE is camping/connected, information for indicating to prioritize selection/reselection of the number of hops (to the base station), and information for indicating to prioritize selection/reselection of sidelink measurement (e.g., SL-RSRP/SD-RSRP measurement) for the relay UE. For example, when the maximum number of hops allowed for the intermediate relay UE is indicated, the intermediate relay UE may not consider (e.g., may exclude) the sidelink relay as a suitable relay UE when the number of hops to the base station of the relay UE exceeds the maximum hop count that is configured or indicated to the intermediate relay UE although it is the sidelink relay UE (meeting a specific threshold). Alternatively, the sidelink relay UE may not be considered as a candidate relay UE (may be excluded). As another example, if information (e.g., cell, hop count, sidelink measurement) to be preferentially used for relay selection is configured/indicated in the intermediate relay UE, the intermediate relay UE may prioritize the information to select/reselect the last relay UE or another relay UE.

The intermediate relay UE or the remote UE may support relay selection considering the hop count.

The intermediate relay UE may transmit/receive necessary information for another intermediate relay UE (and/or first relay UE and/or remote UE) to select/reselect the intermediate relay UE by including it in the discovery message (e.g., one or more of an announcement message or a solicitation message, or a response message to the solicitation message).

The intermediate relay UE may provide information indicating that the sidelink relay is in the base station coverage as a discovery parameter of the relay UE through the relay service code (RSC), or through indication information associated with the relay service code, or through any parameter included in the discovery message.

The intermediate relay UE may provide information indicating whether the sidelink relay is in a state capable of providing intermediate relay UE function/service by being directly/indirectly connected to the last relay as a discovery parameter of the relay UE through the relay service code (RSC), or through indication information associated with the relay service code, or through any parameter included in the discovery message.

The intermediate relay UE may provide information indicating that the sidelink relay is in an RRC connected state or in a connectable state by being directly/indirectly connected to the last relay as a discovery parameter of the relay UE through the relay service code (RSC), or through indication information associated with the relay service code, or through any parameter included in the discovery message. For example, the information may be transmitted by including it in an RRC container included in a discovery announcement message.

The intermediate relay UE may provide information about the number of hops where the sidelink relay is connected to the base station (or information about the number of hops connected to the last relay, or the information about the number of hops connected to the base station excluding 1) as a discovery parameter of the relay UE through the relay service code (RSC), or through indication information associated with the relay service code, or through any parameter included in the discovery message.

The intermediate relay UE may provide, as the discovery parameter of the relay UE, any cell identification information (e.g., NR CGI, PCI) meeting a specific threshold or identification information of the cell (e.g., one of any cell identification information such as NR CGI or PCI) where the sidelink relay is camping/connected/connectable/in coverage through the relay service code (RSC), or through indication information associated with the relay service code, or through any parameter included in the discovery message. For example, another intermediate relay UE (or remote UE) may preferentially select/reselect the intermediate relay UE positioned in the same cell based on the cell identification information.

The last relay UE (?? Intermediate relay UE ??) may include the PC5 RSRP measurement value for the relay UE to which the sidelink relay is connected/connectable through the relay service code (RSC), or through indication information associated with the relay service code, or through any parameter included in the discovery message. The information may represent the measurement value itself or information (e.g., good/average/poor) coded into n steps (where n is a natural number larger than 1). The information may be used by the intermediate relay UE or the remote UE to select the relay UE.

The intermediate relay UE may provide path information where the sidelink relay is connected to the base station as a discovery parameter of the relay UE through the relay service code (RSC), or through indication information associated with the relay service code, or through any parameter included in the discovery message. The information may indicate the sidelink relay UE set providing connection/connectivity between the intermediate relay UE and the base station. For example, when the intermediate relay UE is connected to the last relay UE, it may include information about the last relay UE. When the intermediate relay UE is connected to the last relay UE through another intermediate relay UE, it may include information about the other intermediate relay UE and the last relay UE. The relay UE information may use one or more of any identifier information of the relay UE (e.g., Local UE ID, L2 Destination ID, L2 Source ID). The information may be used by the intermediate relay UE or the remote UE to select/reselect the relay UE.

### RRC connection management and control method

The L2 remote UE should establish the PDU session and DRB of the remote UE before user plane data transmission. In the typical single hop-based sidelink relay technology, in the procedure for remote UE connection setup, the execution of a discovery procedure between the remote UE and the relay UE and PC5 connection (or PC5-RRC connection) setup were performed first. Then, the remote UE performed an RRC setup procedure with the base station through the relay UE.

To support multi-hop-based sidelink relay, base station connection using only the execution of a discovery procedure between the remote UE and the relay UE and the PC5 connection setup may be impossible. Additional operations for supporting it may be necessary.

For example, discovery between the remote UE and the first relay UE, discovery between the first relay UE and the intermediate relay UE, and discovery between the intermediate relay UE and the last relay UE may be sequentially performed, and the remote UE may perform the RRC setup procedure with the base station through the plurality of relay UEs.

The remote UE may establish a PC5 connection by discovering any relay UE. For example, the remote UE may perform a discovery procedure. The remote UE may select the first relay UE. The remote UE and the first relay UE may establish a PC5-RRC connection using the NR sidelink PC5 unicast link setup procedure.

If the first relay UE may not provide connectivity to the base station through the Uu interface (e.g., if the Uu-RSRP is less than a predetermined threshold), the first relay UE may perform a discovery procedure to discover another relay UE. For example, the first relay UE may perform a discovery procedure. The first relay UE may select the intermediate relay UE. The first relay UE and the intermediate relay UE establish a PC5-RRC connection using the NR sidelink PC5 unicast link setup procedure.

If the intermediate relay UE may not provide connectivity to the base station through the Uu interface (e.g., if the Uu-RSRP is less than a predetermined threshold), the intermediate relay UE may perform a discovery procedure to discover another relay UE. For example, the intermediate relay UE may perform a discovery procedure. The intermediate relay UE may select the last relay UE. The intermediate relay UE and the last relay UE establish a PC5-RRC connection using the NR sidelink PC5 unicast link setup procedure.

When the intermediate relay UE is connected to the last relay UE (e.g., PC5-RRC connection setup), the intermediate relay UE may indicate this to the first relay UE. The first relay UE may indicate this to the remote UE.

The remote UE may transmit an RRC setup/establishment request message (e.g., RRCSetupRequest) for RRC connection setup with the base station through the plurality of sidelink relay UEs. The message may be transmitted using the designated PC5 relay RLC channel configuration between the remote UE and the first relay UE, between the first relay UE and the intermediate relay UE, and between the intermediate relay UE and the last relay UE.

When the first relay UE receives a message on the designated PC5 relay RLC channel, if the first relay UE is not in an RRC connected state, the first relay UE may perform its own Uu RRC connection setup/establishment procedure. The first relay UE may transmit an RRC setup/establishment request message (e.g., RRCSetupRequest) for RRC connection setup with the base station through the plurality of sidelink relay UEs. The message may be transmitted using the designated PC5 relay RLC channel configuration between the first relay UE and the intermediate relay UE and between the intermediate relay UE and the last relay UE. The base station may transmit an RRC setup message (e.g., RRCSetup) to the first relay UE. The message may be transmitted using the designated PC5 relay RLC channel configuration between the first relay UE and the intermediate relay UE as well as between the intermediate relay UE and the last relay UE. The first relay UE may request the dedicated configuration necessary to support the remote UE through a sidelink UE information message.

When the intermediate relay UE receives a message on the designated PC5 relay RLC channel, if the intermediate relay UE is not in an RRC connected state, the intermediate relay UE may perform its own Uu RRC connection setup/establishment procedure. The intermediate relay UE may transmit an RRC setup/establishment request message (e.g., RRCSetupRequest) for RRC connection setup with the base station through a sidelink relay UE. The message may be transmitted using the designated PC5 relay RLC channel configuration between the intermediate relay UE and the last relay UE. The base station may transmit an RRC setup message (e.g., RRCSetup) to the intermediate relay UE. The message may be transmitted using the designated PC5 relay RLC channel configuration between the intermediate relay UE and the last relay UE. The intermediate relay UE may request a dedicated configuration necessary to support the remote UE through a sidelink UE information message.

When the last relay UE receives a message on the designated PC5 relay RLC channel, if the last relay UE is not in an RRC connected state, the last relay UE may perform its own Uu RRC connection setup/establishment procedure. The last relay UE may request a dedicated configuration necessary to support the remote UE through a sidelink UE information message.

After the RRC connection setup procedure of the last relay UE and the transmission of the sidelink UE information message, the base station may configure SRB0 for relaying a Uu relay RLC channel to the last relay UE. The base station may respond with an RRC setup message (e.g., RRCSetup) to the remote UE. The RRC message may be transferred from the base station to the last relay UE using SRB0 for relaying a Uu relay RLC channel. The RRC message may be transferred to the last relay UE through the intermediate relay UE using the designated PC5 relay RLC channel. The RRC message may be transferred to the intermediate relay UE through the first relay UE using the designated PC5 relay RLC channel. The RRC message may be transferred to the first relay UE through the remote UE using the designated PC5 relay RLC channel.

The base station may perform a relaying channel setup procedure through Uu with the last relay UE. The base station may transmit an RRC reconfiguration message to the last relay UE. The base station may transmit an RRC reconfiguration message to the intermediate relay UE. The base station may transmit an RRC reconfiguration message to the first relay UE. The base station may transmit an RRC reconfiguration message to the remote UE. According to the configuration from the base station, the last relay UE and the intermediate relay UE may establish a PC5 RLC channel for SRB 1 relaying.

As another example, discovery between the last relay UE and the intermediate relay UE, discovery between the intermediate relay UE and the first relay UE, and discovery between the first relay UE and the remote UE may be sequentially performed, and the remote UE may perform an RRC setup procedure with the base station through the plurality of relay UEs.

In an example, the last relay UE and the intermediate relay UE may perform a discovery procedure. For example, if the last relay UE receives a paging message for the remote UE by the base station, the last relay UE may perform a discovery procedure. The last relay UE may select the intermediate relay UE. Alternatively, the intermediate relay UE may select the last relay UE.

The last relay UE and the intermediate relay UE may establish a PC5-RRC connection using an NR sidelink PC5 unicast link setup procedure. (Optionally) The intermediate relay UE may perform an RRC setup procedure with the base station through the last relay UE. The intermediate relay UE may transmit an RRC setup/establishment request message (e.g., RRCSetupRequest) for RRC connection setup with the base station through a sidelink relay UE. The message may be transmitted using the designated PC5 relay RLC channel configuration between the intermediate relay UE and the last relay UE. The base station may transmit an RRC setup message (e.g., RRCSetup) to the intermediate relay UE. The message may be transmitted using the designated PC5 relay RLC channel configuration between the last relay UE and the intermediate relay UE. The last relay UE (or intermediate relay UE) may request a dedicated configuration necessary to support the remote UE through a sidelink UE information message. The last relay UE may transmit the paging message received from the base station to the intermediate relay UE through a sidelink RRC message. Alternatively, the base station may retransmit/transmit the paging message to the intermediate relay UE through the last relay UE. Alternatively, the step of the intermediate relay UE performing an RRC setup procedure with the base station through the last relay UE may be performed after the first relay UE discovers the remote UE and establishes a PC5 connection.

The intermediate relay UE and the first relay UE may perform a discovery procedure. The intermediate relay UE may select the first relay UE. Alternatively, the first relay UE may select the intermediate relay UE.

The intermediate relay UE and the first relay UE may establish a PC5-RRC connection using the NR sidelink PC5 unicast link setup procedure. (Optionally) the first relay UE may perform a RRC setup procedure with the base station through the intermediate relay UE (or multi-hop sidelink relays including the intermediate relay UE). The first relay UE may transmit an RRC setup/establishment request message (e.g., RRCSetupRequest) for RRC connection setup with the base station through a sidelink relay UE.

The message may be transmitted using the designated PC5 relay RLC channel configuration between the first relay UE and the intermediate relay UE, and the designated PC5 relay RLC channel configuration between the intermediate relay UE and the last relay UE. The base station may transmit an RRC setup message (e.g., RRCSetup) to the intermediate relay UE. The message may be transmitted using the designated PC5 relay RLC channel configuration between the last relay UE and the intermediate relay UE, and the designated PC5 relay RLC channel configuration between the intermediate relay UE and the first relay UE. The intermediate relay UE may request a dedicated configuration necessary to support the remote UE through a sidelink UE information message. The intermediate relay UE may transmit the paging message received from the base station (or from the last relay UE) to the first relay UE through a sidelink RRC message. Alternatively, the base station may retransmit/transmit the paging message to the first relay UE through the last relay UE and the intermediate relay UE.

Alternatively, the step of the first relay UE performing an RRC setup procedure with the base station through the intermediate relay UE may be performed after the first relay UE discovers the remote UE and establishes a PC5 connection.

The first relay UE and the remote UE may perform a discovery procedure. The first relay UE may select the remote UE. Alternatively, the remote UE may select the first relay UE.

The first relay UE and the remote UE may establish a PC5-RRC connection using the NR sidelink PC5 unicast link setup procedure. The remote UE may perform a RRC setup procedure with the base station through the first relay UE (or multi-hop sidelink relays including the first relay UE).

The remote UE may transmit an RRC setup/establishment request message (e.g., RRCSetupRequest) for RRC connection setup with the base station through the sidelink relay UE. The message may be transmitted using the designated PC5 relay RLC channel configuration between the remote UE and the first relay UE, the designated PC5 relay RLC channel configuration between the first relay UE and the intermediate relay UE, and the designated PC5 relay RLC channel configuration between the intermediate relay UE and the last relay UE. The base station may transmit an RRC setup message (e.g., RRCSetup) to the first relay UE.

The message may be transmitted using the designated PC5 relay RLC channel configuration between the last relay UE and the intermediate relay UE, the designated PC5 relay RLC channel configuration between the intermediate relay UE and the first relay UE, and the designated PC5 relay RLC channel configuration between the first relay UE and the remote UE. The first relay UE may request the dedicated configuration necessary to support the remote UE through a sidelink UE information message. The first relay UE may transmit the paging message received from the base station (or from the intermediate relay UE) to the remote UE through a sidelink RRC message. Alternatively, the base station may retransmit/transmit the paging message to the remote UE through the last relay UE, the intermediate relay UE, and the first relay UE. In another method, the paging message may be transmitted before the remote UE performs an RRC connection setup/establishment with the base station through a sidelink relay UE.

Alternatively, the step of the first relay UE performing an RRC setup procedure with the base station through the intermediate relay UE may be performed after the first relay UE discovers the remote UE and establishes a PC5 connection. For example, it may be performed as the remote UE transmits an RRC setup/establishment request message (e.g., RRCSetupRequest) to the first relay UE.

As another example, to support connectivity to the base station through a multi-hop sidelink relay UE, identification of connectivity availability with the base station may be required first. To this end, it may be possible to enable a multi-hop sidelink relay connection only when discovery and/or PC5 connection setup with a sidelink relay UE within the base station coverage is possible.

The intermediate relay UE may select/reselect the last relay only when the last relay UE (and/or another intermediate relay UE) capable of base station connection is discovered during the discovery process, e.g., only when the last relay (and/or another intermediate relay UE) is included in candidate relay UEs meeting the relay UE selection criteria/conditions and/or suitable relay UEs (in light of radio link quality and/or higher layer). The intermediate relay UE may establish a PC5 connection with the last relay UE.

The first relay UE may select/reselect the intermediate relay only upon discovering an intermediate relay UE capable of connecting to base station during the discovery process, e.g., only when the relay UE having base station connectivity (e.g., the relay UE is connected to the last relay UE connected to the base station) is present in candidate relay UEs meeting the relay UE selection criteria/conditions and/or suitable relay UEs (in light of radio link quality and/or higher layer) and/or the corresponding relay UE. The first relay UE may set up a PCS connection with the last relay UE.

The remote UE may select/reselect the first relay upon discovering a first relay UE capable of base station connectivity during the discovery process, e.g., only when the relay UE in the state capable of base station connection (e.g., the relay UE is connected to the intermediate relay UE connected to the base station) is present in candidate relay UEs meeting the relay UE selection criteria/conditions and/or suitable relay UEs (in light of radio link quality and/or higher layer) and/or the corresponding relay UE. The remote UE may set up a PCS connection with the first relay UE.

Thereafter, the remote UE may perform an RRC setup procedure with the base station through multiple relay UEs.

As another example, in a state in which discovery and/or PCS connection setup has been performed between the remote UE and/or the sidelink relay UE in any sequence, the remote UE may perform an RRC setup procedure with the base station through a plurality of sidelink relay UEs.

As an example, discovery between the remote UE and the first relay UE, discovery between the first relay UE and the intermediate relay UE, and discovery between the intermediate relay UE and the last relay UE may be performed (either as a single procedure or as separate steps). Thereafter, the remote UE may perform the RRC setup procedure with the base station through the plurality of relay UEs.

As another example, discovery between the remote UE and the first relay UE, discovery between the first relay UE and the intermediate relay UE, and discovery between the intermediate relay UE and the last relay UE may be performed (either jointly or individually). Subsequently, PC5 connection setup between the remote UE and the first relay UE, PC5 connection setup between the first relay UE and the intermediate relay UE, and PC5 connection setup between the intermediate relay UE and the last relay UE may be performed (as a single or multiple steps). Thereafter, the remote UE may perform the RRC setup procedure with the base station through the plurality of relay UEs.

According to the embodiments described above, the connection of multi-hop sidelink relay UEs may be effectively controlled.

Hereinafter, configurations of the last relay UE and the intermediate relay UE performing the above-described operations are briefly described again. The remote UE and the base station may also be configured for the above-described multi-hop relay operation.

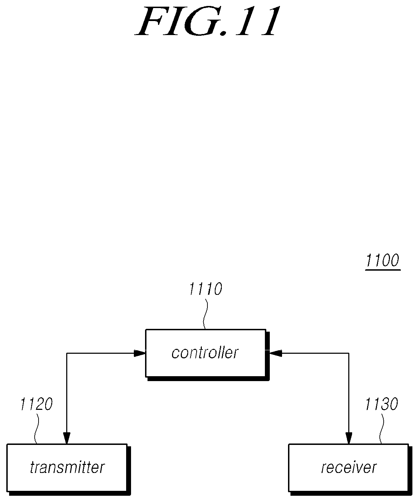

FIG. 11 is a view illustrating a configuration of an intermediate relay UE according to an embodiment.

Referring to FIG. 11, an intermediate relay UE 1100 performing connection control for a multi-hop relay operation in a sidelink network may include a receiver 1130 receiving system information for a multi-hop sidelink relay operation and a transmitter 1120 transmitting a discovery message including at least one of information about whether there is an RRC connection and information about a number of hops connected with a base station.

For example, the intermediate relay UE 1100 may be configured to perform a relay UE operation and a remote UE operation simultaneously. The intermediate relay UE 1100 may include a relay UE function for relaying data between the remote UE and the parent UE. Further, the intermediate relay UE 1100 may include a remote UE function for operating as the remote UE.

The intermediate relay UE 1100 may operate as the remote UE to transfer or receive data to or from an upper relay UE. Further, the intermediate relay UE 1100 may operate as a relay UE to transfer or receive data to/from a lower relay UE or the remote UE.

The receiver 1130 may receive a sidelink RRC message from the parent relay UE. The parent relay UE, which is a relay UE positioned higher than the intermediate relay UE, may be another intermediate relay UE or the last relay UE.

The receiver 1130 may receive system information transmitted by a base station. The system information may be received directly from the base station. Alternatively, the system information may be received from a last relay UE or a parent relay UE.

For example, the system information may include at least one of indication information indicating whether the multi-hop sidelink relay operation is supported and discovery threshold information. The indication information indicating whether the multi-hop sidelink relay operation is supported indicates whether the base station may support the multi-hop sidelink relay operation according to the disclosure. For example, the indication information may indicate whether the base station possesses the sidelink multi-hop relay support function. For this purpose, the indication information may be configured as 1 bit.

Further, the discovery threshold information may include a threshold used for multi-hop sidelink relay connections. For example, the threshold may represent an RSRP value. The discovery threshold information may represent an SD-RSRP threshold for the intermediate relay UE 1100 to evaluate AS layer conditions for discovery operations. The intermediate relay UE may apply the discovery threshold to evaluate AS layer conditions to determine whether to transfer a discovery solicitation message when performing multi-hop sidelink relay discovery.

Meanwhile, the system information may be SIB12 and may include configuration information for sidelink relay operations.

The controller 1110 may store information included in the system information in the intermediate relay UE. Further, the controller 1110 may configure entities for relay operation in the UE using the configuration information of the system information.

For example, the discovery message may be any one of a discovery announcement message, a discovery solicitation message, and a discovery response message. The controller 1110 may perform a discovery procedure using the above-described system information. The discovery procedure may include various operations.

In an example, the transmitter 1120 may transmit a discovery announcement message to transmit information about whether the sidelink relay operation is supported. As another example, the transmitter 1120 may transmit a discovery solicitation message to perform a connection operation with a parent relay UE or a child relay UE for a sidelink relay connection. In yet another example, the transmitter 1120 may transmit a discovery response message to perform a connection operation with the parent relay UE or child relay UE that transmitted the discovery solicitation message.

Here, the discovery message may include at least one of information (e.g., RRC connection information) indicating whether there is an RRC connection and information (e.g., hop count information) indicating the number of hops to the base station as described above. For example, the RRC connection information may indicate whether the intermediate relay UE 1100 is in an RRC connected state. Alternatively, the RRC connection information may include information indicating whether the intermediate relay UE 1100 is in a state capable of entering an RRC connected state. The hop count information may include a counting value that counts the number of hops where the intermediate relay UE 1100 is connected to the base station. Further, the discovery message may further include a maximum hop limit value (hop limit) where the intermediate relay UE 1100 may be connected to the base station.

Meanwhile, the transmission of the discovery message may be determined based on the signal strength information of the discovery solicitation message received from the child relay node and the discovery threshold information included in the system information.

For example, the receiver 1130 may receive a discovery solicitation message from the child relay UE. The controller 1110 may determine whether to transmit the discovery message according to the comparison result of the signal strength information of the received discovery solicitation message and the discovery threshold information. For example, when the received signal strength of the discovery solicitation message exceeds (or is equal to) the discovery threshold, the controller 1110 may determine to transmit the discovery message.

Here, the discovery message may be a discovery solicitation message or a discovery response message.

In an example, if the discovery solicitation message received from the child relay UE is received with a signal strength equal to or larger than the discovery threshold, the controller 1110 may control to transfer the discovery solicitation message to the parent relay UE. Here, the discovery solicitation message may include indication information indicating whether there is an RRC connection and hop count information, hop limit information, etc., as described above.

As another example, when it already has a link according to the PCS interface with the parent relay UE (e.g., the last relay UE), and the signal strength of the discovery solicitation message exceeds the discovery threshold, the controller 1110 may control transmission of a discovery response message to the child relay UE.

Further, the controller 1110 controls the overall operation of the intermediate relay UE 1100 according to connection control operation according to the sidelink-based multi-hop relay operation necessary for performing the above-described disclosure.

The transmitter 1120 and the receiver 1130 are used to transmit/receive signals, messages, or data necessary for performing the above-described embodiments, with the relay UE, the remote UE, or the like.

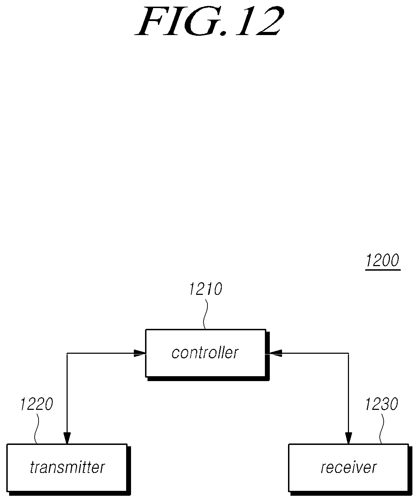

FIG. 12 is a block diagram illustrating a last relay UE according to an embodiment.

Referring to FIG. 12, a last relay UE 1200 performing a connection control operation for a multi-hop relay operation in a sidelink network may include a receiver 1230 receiving system information for a multi-hop sidelink relay operation from a base station and receiving a discovery solicitation message from a child relay UE, a controller 1210 determining whether to transmit a discovery response message based on the discovery solicitation message and the system information, and a transmitter 1220 transmitting the discovery response message to the child relay UE.

The receiver 1230 may receive system information transmitted by a base station. The system information may be received through SIB 12.

For example, the system information may include at least one of indication information indicating whether the multi-hop sidelink relay operation is supported and discovery threshold information. The indication information indicating whether the multi-hop sidelink relay operation is supported indicates whether the base station may support the multi-hop sidelink relay operation according to the disclosure. For example, the indication information may indicate whether the base station possesses the sidelink multi-hop relay support function. For this purpose, the indication information may be configured as 1 bit.

Further, the discovery threshold information may include a threshold used for multi-hop sidelink relay connections. For example, the threshold may represent an RSRP value. The discovery threshold information may represent an SD-RSRP threshold for evaluating AS layer conditions for a discovery operation by the intermediate relay UE, the last relay UE, or the first relay UE. The controller 1210 may evaluate the access stratum (AS) layer condition by applying the discovery threshold to determine whether to transmit a response message to a discovery solicitation message when performing multi-hop sidelink relay discovery.

The controller 1210 may store the information included in the system information in the last relay UE. Further, the controller 1210 may configure entities for relay operation in the UE using the configuration information of the system information.

Meanwhile, the receiver 1230 may receive a discovery solicitation message transmitted by a lower child relay UE. Here, the child relay UE may mean the intermediate relay UE not connected to the last relay UE through a PCS interface link.

The controller 1210 may perform a connection operation with the child relay UE that transmitted the discovery solicitation message by transmitting a discovery response message. To this end, the controller 1210 may determine whether to transmit a discovery response message to the discovery solicitation message.

For example, the transmission of the discovery response message may be determined based on the signal strength information for the discovery solicitation message and the discovery threshold information included in the system information. In an example, the controller 1210 may determine to transmit the discovery response message to the child relay UE when the signal strength information exceeds the discovery threshold information. In other words, the controller 1210 may determine to transmit the discovery response message when the received discovery solicitation message indicates a received signal strength equal to or larger than the discovery threshold. Here, the received signal strength may be an RSRP value.

The discovery solicitation message or the discovery response message may include at least one of information about whether there is an RRC connection and information about the number of hops connected to the base station. For example, the information about whether there is an RRC connection may indicate whether the last relay UE or the intermediate relay UE is in an RRC connected state. Alternatively, the information about whether there is an RRC connection may include information indicating whether the intermediate relay UE or the last relay UE is in a state capable of entering the RRC connected state. The information about the number of hops connected to the base station may include a counting value that counts the number of hops where the intermediate relay UE or the last relay UE is connected to the base station. Further, the discovery solicitation message or the discovery response message may further include a maximum hop limit value (hop limit) where the intermediate relay UE or the last relay UE may be connected to the base station.

The transmitter 1220 may transmit the discovery response message to the child relay UE based on the determination result regarding whether to transmit the above-described discovery response message.

Further, the controller 1210 controls the overall operation of the last relay UE 1200 according to connection control operation according to the sidelink-based multi-hop relay operation necessary for performing the above-described disclosure.

The transmitter 1220 and the receiver 1230 are used to transmit/receive signals, messages, or data necessary for performing the above-described disclosure, with the relay UE, the base station, the remote UE, or the like.

Through this, the remote UE may be sequentially connected to a child relay UE (first relay UE), an intermediate relay UE, and a last relay UE to establish a multi-hop sidelink relay connection.

Further, the base station may include a controller, a transmitter, and a receiver.

The controller controls the overall operation of the base station to support data transmission/reception operation through a sidelink multi-hop relay operation necessary to perform the present embodiments described above.

The transmitter and the receiver are used to transmit/receive signals, messages, or data necessary for performing the above-described disclosure, with the relay UE, the remote UE, or the like.

Further, the remote UE may also include a receiver, a controller, and a transmitter.

The receiver receives downlink control information and data or messages from the relay UE or the base station through a corresponding channel.

Further, the controller controls the overall operation of the remote UE according to the connection control operation through a sidelink multi-hop relay operation.

The transmitter transmits uplink control information, data, and messages to the relay UE and the base station through a corresponding channel.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for connection control of an intermediate relay user equipment (UE) providing a multi-hop relay operation in a sidelink network, the method comprising:
receiving system information for a multi-hop sidelink relay operation; and
transmitting a discovery message that includes at least one of i) RRC connection information indicating whether there is an RRC connection and ii) hop count information indicating a number of hops to a base station.

2. The method of claim 1, wherein the system information includes at least one of indication information indicating whether the multi-hop sidelink relay operation is supported and discovery threshold information.

3. The method of claim 1, wherein the discovery message is any one of a discovery announcement message, a discovery solicitation message, and a discovery response message.

4. The method of claim 1, wherein whether to transmit the discovery message is determined based on signal strength information for a discovery solicitation message received from a child relay UE and discovery threshold information included in the system information.

5. The method of claim 4, wherein the transmitting a discovery message comprises:
when the signal strength information exceeds the discovery threshold information, transmitting the discovery message to the child relay UE,
wherein the discovery message is a discovery response message.

6. A method for connection control of a last relay UE providing a multi-hop relay operation in a sidelink network, the method comprising:
receiving system information for a multi-hop sidelink relay operation from a base station;
receiving a discovery solicitation message from a child relay UE;
determining whether to transmit a discovery response message based on the discovery solicitation message and the system information; and
transmitting the discovery response message to the child relay UE.

7. The method of claim 6, wherein the system information includes at least one of indication information indicating whether the multi-hop sidelink relay operation is supported and discovery threshold information.

8. The method of claim 6, wherein the child relay UE is an intermediate relay UE without a PC5 interface link with the last relay UE.

9. The method of claim 6, wherein whether to transmit the discovery response message is determined based on signal strength information for the discovery solicitation message and discovery threshold information included in the system information.

10. The method of claim 9, wherein the determining whether to transmit the discovery message comprises:
when the signal strength information exceeds the discovery threshold information, transmitting the discovery response message to the child relay UE.

11. The method of claim 6, wherein the discovery solicitation message or the discovery response message includes at least one of RRC connection information indicating whether there is an RRC connection and hop count information indicating a number of hops connected to a base station.

12. An intermediate relay UE performing connection control through a multi-hop relay operation in a sidelink network, comprising:
a receiver receiving system information for a multi-hop sidelink relay operation; and
a transmitter transmitting a discovery message including at least one of RRC connection information indicating whether there is an RRC connection and hop count information indicating a number of hops connected to a base station.

13. The intermediate relay UE of claim 12, wherein the system information includes at least one of indication information indicating whether the multi-hop sidelink relay operation is supported and discovery threshold information.

14. The intermediate relay UE of claim 12, wherein the discovery message is any one of a discovery announcement message, a discovery solicitation message, and a discovery response message.

15. The intermediate relay UE of claim 12, wherein whether to transmit the discovery message is determined based on signal strength information for a discovery solicitation message received from a child relay UE and discovery threshold information included in the system information.
